# EUROPÄISCHE PATENTANMELDUNG

(11) **EP 2 067 642 A2**
(43) Veröffentlichungstag der Anmeldung: **10.06.2009**
(21) Anmeldenummer: 08020228.6
(22) Anmeldetag: 20.11.2008
(51) Int. Cl.: B60J 7/12

(54) **Fahrzeug mit einem Softtopdach**

(30) Priorität: 06.12.2007 DE 102007059036
(71) Anmelder: Webasto AG, 82131 Stockdorf (DE)
(72) Erfinder: Mückl, Harald, 86899 Landsberg (DE); Dintner, Thomas, 80995 München (DE); Respondek, Michael, 81249 München (DE)
(74) Vertreter: Konnerth, Dieter Hans

(57) **Zusammenfassung**

Die Erfindung betrifft ein Fahrzeug mit einem Softtop-Dach, das ein vorderes Dachteil (4) und ein hinteres Dachteil (5) sowie einen von diesen getragenen und an diesen befestigten Verdeckstoff (25) aufweist, wobei die beiden an der Karosserie bewegbar gelagerten Dachteile (4, 5) zusammen mit dem Verdeckstoff (25) zwischen einer den Fahrzeuginnenraum überdeckenden Schließstellung und einer den Fahrzeuginnenraum freigebenden Ablagestellung, in der sie in einem heckseitigen Ablageraum (3) des Fahrzeugs abgesenkt sind, verstellbar sind, und wobei erfindungsgemäß vorgesehen ist, dass der Verdeckstoff (25) zumindest an einem der beiden Dachteile (4, 5) an einem Ausgleichsbauteil (28) befestigt ist, das an diesem Dachteil (4 bzw. 5) bewegbar gelagert ist und das beim Verstellvorgang des Daches (2) eine Ausgleichsbewegung für einen sich ändernden Abstand zwischen den beiden sich bewegenden Dachteilen (4, 5) ausführt.

## Beschreibung

Die Erfindung betrifft ein Fahrzeug mit einem Softtop-Dach, das ein vorderes Dachteil und ein hinteres Dachteil sowie einen von diesen getragenen und an diesen befestigten Verdeckstoff aufweist, wobei die beiden an der Karosserie bewegbar gelagerten Dachteile zusammen mit dem Verdeckstoff zwischen einer den Fahrzeuginnenraum überdeckenden Schließstellung und einer den Fahrzeuginnenraum freigebenden Ablagestellung, in der sie in einem heckseitigen Ablageraum des Fahrzeugs abgesenkt sind, verstellbar sind.

Aus der DE 102 05 935 A1 ist ein Fahrzeug mit einem derartigen Dach bekannt geworden, das zwischen seiner Schließstellung über einem Fahrzeuginnenraum und seiner Offenstellung in einem Dachablageraum verstellbar ist und einen Vorderabschnitt, einen Mittelabschnitt und einen Hinterabschnitt aufweist, wobei der Vorderabschnitt und der Hinterabschnitt als feste Dachteile gebildet sind und der Mittelabschnitt von einem Verdeckstoff gebildet wird, der auch den Vorderabschnitt und den Hinterabschnitt überdecken kann und an diesen fest angebracht ist. Beim Ablegen des Daches nähern sich der Vorderabschnitt und der Hinterabschnitt des Daches an, so dass der Verdeckstoff entspannt wird und sich zwischen dem Vorderabschnitt und dem Hinterabschnitt in Falten legen kann.

Die WO 2006/039911 A1 offenbart ein Fahrzeug mit einem umwandelbaren Dach, das ein vorderes Dachteil und ein hinteres Dachteil aufweist, die zwischen einer den Fahrzeuginnenraum überdeckenden Schließstellung und einer den Fahrzeuginnenraum freigebenden Ablagestellung, in der sie in einem heckseitigen Ablageraum des Fahrzeugs abgesenkt sind, verstellbar sind. Das vordere Dachteil und das hintere Dachteil sind mittels jeweiliger Lagereinrichtungen an einem karosserieseitigen Hauptlager schwenkbar gelagert und können beim Verstellen in die Ablagestellung in reiner Schwenkbewegung um eine jeweilige feststehende Schwenkachse mit ihren Oberseiten nach unten umschwenken. Durch die reine Schwenkbewegung der beiden Dachteile ergibt sich ein besonders einfacher Bewegungsablauf der Dachteile, der dementsprechend mittels einfach gestalteter Lagereinrichtungen für die Dachteile ausführbar ist. Ein beide Dachteile überspannender und an den Dachteilen befestigter Verdeckstoff würde jedoch der Bewegung der beiden Dachteile beim Öffnen des Daches entgegenstehen, wenn sich die Dachteile beim Ablegen wesentlich voneinander entfernen. Ein Verdeckstoff müsste demzufolge eine hohe Flexibilität aufweisen, um den Bewegungen der beiden Dachteile ohne Beschädigung oder Überdehnung folgen zu können.

Der Erfindung liegt die Aufgabe zugrunde, ein eingangs genanntes Fahrzeug zu schaffen, dessen Softtopdach in seiner Gestaltung hinsichtlich der Anpassung des Verdeckstoffes bei der Verstellung des Daches verbessert ist.

Die Aufgabe wird bei dem oben genannten Fahrzeug erfindungsgemäß dadurch gelöst, dass der Verdeckstoff zumindest an einem der beiden Dachteile an einem Ausgleichsbauteil befestigt ist, das an diesem Dachteil bewegbar gelagert ist und das beim Verstellvorgang des Daches eine Ausgleichsbewegung für einen sich ändernden Abstand zwischen den beiden sich bewegenden Dachteilen ausführt.

Vorteilhafte Ausgestaltungen der Erfindung sind in den Unteransprüchen angegeben.

Dieses eine Ausgleichsbewegung ausführende Ausgleichsbauteil ermöglicht es dem Verdeckstoff, sich an die unterschiedlichen Stellungen der Dachteile, die insbesondere jeweils für sich an der Karosserie oder einem karosseriefesten Bauteil gelagert sind, bei ihren Bewegungen zwischen der Schließstellung und der Ablagestellung des Daches anzupassen und diese Bewegungen damit nicht zu behindern, wobei insbesondere ein sich vergrößernder Abstand zwischen den beiden Dachteilen ohne nachteilige Folgen für den Verdeckstoff ist. Damit eignet sich dieses Ausgleichsbauteil für jede Art von Softtopdach, bei dem sich zwei Dachteile, an denen der Verdeckstoff gelagert und gegebenenfalls auch befestigt ist, beim Verstellen zwischen der Schließstellung und der Offen- oder Ablagestellung in ihrer Position derart zueinander verändern, dass ein beidseits fest angebrachter Verdeckstoff überdehnt werden müsste, um den Bewegungen der beiden Dachteile folgen zu können. Bei der Ausführungsform mit einem Ausgleichsbauteil an dem vorderen Dachteil und einem Ausgleichsbauteil an dem hinteren Dachteil können z. B. die Bewegungswege der beiden Ausgleichsbewegungen aufgeteilt werden und das Bewegungsverhalten bedarfsgerecht eingestellt werden. Diese Lösung bietet somit eine große Flexibilität bei der Gestaltung und Auslegung des Daches bzw. der relevanten Komponenten für die Ausgleichsbewegung.

Zweckmäßigerweise ist das zumindest eine Ausgleichsbauteil an dem Dachteil in Fahrzeuglängsrichtung verstellbar gelagert und es ist insbesondere an zumindest einer Längsführung des jeweiligen Dachteils verschiebbar gelagert. Da das Softtopdach üblicherweise in Fahrzeuglängsrichtung verstellt wird, ist dies auch die bevorzugte Verstellrichtung für das Ausgleichsbauteil. Jedoch können auch hubartige Verstellrichtungen und Verstelleinrichtungen verwendet werden wie auch andere Lagerungen und Führungen des Ausgleichsbauteils, z. B. Lenkereinrichtungen.

In bevorzugter Ausgestaltung ist das Ausgleichsbauteil an dem hinteren Dachteil bewegbar gelagert. Jedoch kann es grundsätzlich auch an dem oder einem vorderen Dachteil oder einem weiteren Dachteil bewegbar gelagert sein und seine entsprechende Ausgleichsbewegung ausführen.

Der Verdeckstoff kann das Ausgleichsbauteil teilweise oder vollständig überdecken und er ist zumindest am Hinterrand und/oder am Vorderrand des Ausgleichsbauteils befestigt, wobei diese Anbringung an jedem Dachteil gewählt werden kann.

Das Ausgleichsbauteil kann in seine Ausgangslage mittels einer Federeinrichtung vorgespannt sein und vom Verdeckstoff oder einer Stelleinrichtung für seine Ausgleichsbewegung gegen die Federeinrichtung bewegt werden. Die Ausgangslage entspricht der Stellung des Ausgleichsbauteils bei geschlossenem Dach. Die Stelleinrichtung kann in beliebiger Gestaltung insbesondere mit einer Lagereinrichtung des das Ausgleichsbauteil enthaltenden Dachteils gekoppelt sein und über deren Bewegung ihre Stellbetätigung ausführen. Des weiteren kann ein Spannelement oder ein Zugseil oder dergleichen zur Verstellung des Ausgleichsbauteils vorgesehen sein, das einerseits mit dem Ausgleichsbauteil und andererseits z. B. mit einem karosseriefesten Teil in geeigneter Weise verbunden ist. Das Spannelement oder das Zugseil kann das Ausgleichsbauteil definiert in seiner Ausgangslage halten, so dass im Fahrbetrieb durch auf den Verdeckstoff wirkenden Unterdruck eine ungewollte selbsttätige Verstellung ausgeschlossen ist.

Des weiteren kann das Ausgleichsbauteil mittels einer Antriebseinrichtung verstellbar sein, die eine Betätigung des Ausgleichsbauteils entsprechend dem Bewegungsweg des Dachteils ausführt.

Durch eine bevorzugt reine Schwenkbewegung der beiden Dachteile relativ zur Karosserie beim Ablegevorgang ergibt sich ein besonders einfacher Bewegungsablauf der Dachteile, der dementsprechend mittels einfach gestalteter Lagereinrichtungen für die Dachteile ausführbar ist. Somit sind keine aufwändigen Lenkereinrichtungen zum Lagern und Verschwenken der beiden Dachteile erforderlich und die Lagereinrichtungen sind weniger störanfällig und einfacher zu steuern. Das Hauptlager kann aus einem oder mehreren karosseriefesten Teilen gebildet sein.

Besonders vorteilhaft ist es, wenn die Schwenkbewegungen der beiden Dachteile zwischen der Schließstellung und der Ablagestellung simultan erfolgen. Dann können die beiden Dachteile mit nur einer Antriebseinrichtung gekoppelt sein, wodurch sowohl der Beginn wie auch das Ende der Schwenkbewegungen der beiden Dachteile gleichzeitig erfolgen kann. Bei dieser Gestaltung kann auf eine aufwändige Steuerungseinrichtung verzichtet werden. Eine Fehlfunktion mit möglicher Kollisionsgefahr der beiden Dachteile wird dadurch vermieden.

Wenn die beiden parallelen Schwenkachsen der Dachteile voneinander beabstandet sind, kann in Abhängigkeit der Gestaltung des Daches und des Fahrzeugs eine optimierte Positionierung der Dachteile für die Ablagebewegung auch für unterschiedliche Anordnungen der Dachteile festgelegt werden. Grundsätzlich ist jedoch auch eine koaxiale Anordnung der beiden Schwenkachsen möglich. Zweckmäßigerweise ist die Schwenkachse des vorderen Dachteils vor der Schwenkasche des hinteren Dachteils und insbesondere oberhalb der hinteren Schwenkachse angeordnet, um eine einfache kollisionsfreie Ablagebewegung zu gewährleisten. Bevorzugt ist die Schwenkachse des vorderen Dachteils unterhalb des Mittelabschnitts des hinteren Dachteils und die Schwenkachse des hinteren Dachteils ist unterhalb des Hinterrandbereichs des hinteren Dachteils angeordnet.

Grundsätzlich sind die Schwenkachsen derart angeordnet, dass im Ablageraum das vordere Dachteil über dem hinteren Dachteil angeordnet ist, so dass zunächst das hintere Dachteil und danach das vordere Dachteil in den Ablageraum einschwenkt.

Der Schwenkwinkel des vorderen Dachteils und des hinteren Dachteils liegt im Bereich von etwa 180°, wenn die beiden Dachteile in Schließstellung in etwa horizontal ausgerichtet sind und im Ablageraum in umgeschwenkter Stellung gleichfalls in etwa horizontal angeordnet sind. Bei hiervon abweichender Gestaltung kann selbstverständlich der Schwenkwinkel dementsprechend abweichen.

Eine besonders bevorzugte und einfache Gestaltung sieht vor, dass die Lagereinrichtungen des vorderen Dachteils und des hinteren Dachteils feste Abstützungen des jeweiligen Dachteils am zugeordneten karosserieseitigen Schwenklager aufweisen, wobei die feste Abstützung jedes Dachteils z. B. mittels beidseits am Dachteil fest angebrachter Lager- oder Stützarme erfolgt, die am Schwenklager abgestützt sind. Jedoch können die Dachteile auch integral geformte Lagerabschnitte aufweisen.

Bevorzugt ist es, wenn eine Antriebseinrichtung zum Verstellen der beiden Dachteile sowohl mit dem vorderen Dachteil wie auch mit dem hinteren Dachteil in Antriebsverbindung ist, jedoch kann auch jedes Dachteil mit einem Antrieb gekoppelt sein, die durch eine Steuerungseinrichtung die simultane Verschwenkbewegungen der beiden Dachteile erzeugt wird.

Eine einfache bevorzugte Gestaltung sieht vor, dass die Lagereinrichtung jedes Dachteils ein Zahnrad oder ein Zahnsegment aufweist, das am Schwenklager angeordnet ist und mit der Lagereinrichtung bzw. dem Dachteil drehfest verbunden ist, und dass die Antriebseinrichtung zum Verstellen der beiden Dachteile mittels mindestens eines Antriebszahnrades mit beiden Zahnrädern oder den Zahnsegmenten gleichzeitig in Antriebseingriff ist. Diese mechanische Kopplung kann bei kleinem Bauraum die erforderlichen Antriebskräfte übertragen.

Andererseits können die Lagereinrichtungen der beiden Dachteile auch über Lenkergetriebe oder Koppellenker mit der Antriebseinrichtung zum Verstellen der beiden Dachteile gekoppelt sein.

Die Antriebseinrichtung zum Verstellen der beiden Dachteile kann einen Hydraulikzylinder, einen Elektromotor oder auch andere geeignete Antriebe aufweisen. Der Hydraulikzylinder kann über Koppellenker oder über ein rotatorisches Element wie z. B. ein Zahnrad oder ein Zahnsegment mit den Lagereinrichtungen der beiden Dachteile gekoppelt sein.

Die beiden Dachteile können feste Dachschalen oder rahmenartige Strukturen oder Rahmenkonstruktionen sein, die den Verdeckstoff tragen und an denen er zumindest abschnittsweise befestigt ist.

Zweckmäßigerweise ist ein Deckel des Ablageraums oder Verdeckkastendeckel im Bereich seines Hinterrandes am Fahrzeug schwenkbar gelagert und vor dem Verschwenken der Dachteile mit seinem Vorderrand in eine Öffnungsstellung hochschwenkbar.

Nachfolgend wird das Fahrzeug anhand eines Ausführungsbeispiels unter Bezugnahme auf die Zeichnung näher erläutert. Es zeigt:
- Fig. 1: in einer Seitenansicht in schematischer Teildarstellung ein Fahrzeug mit einem in Schließstellung angeordneten Softop-Dach, das ein vorderes Dachteil und ein hinteres Dachteil enthält, die einen Verdeckstoff tragen;
- Fig. 2: in einer Seitenansicht in schematischer Teildarstellung das Fahrzeug mit geschlossenem Dach und einem angehobenen Deckel eines Ablageraums für das Dach;
- Fig. 3: in einer Seitenansicht in schematischer Teildarstellung das Fahrzeug mit angehobenem Deckel, wobei die beiden Dachteile in einer verschwenkten Zwischenstellung beim Ablegen in den Ablageraum dargestellt sind;
- Fig. 4: in einer Seitenansicht in schematischer Teildarstellung das Fahrzeug mit angehobenem Deckel und in den Ablageraum eingeschwenkten Dachteilen; und
- Fig. 5: in einer Seitenansicht in schematischer Teildarstellung das Fahrzeug mit in den Ablageraum eingeschwenkten Dachteilen und wie der abgesenktem und die Dachteile im Ablageraum abdeckendem Deckel.

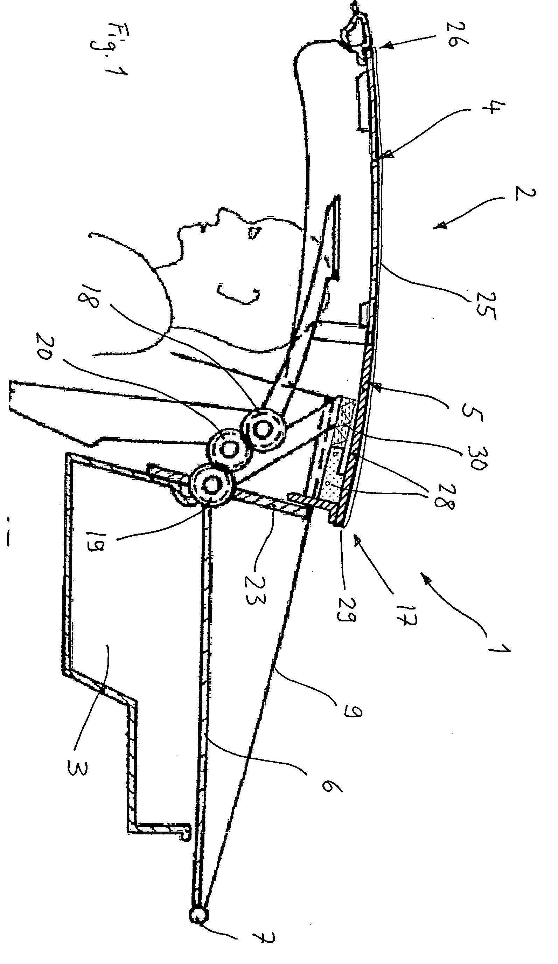

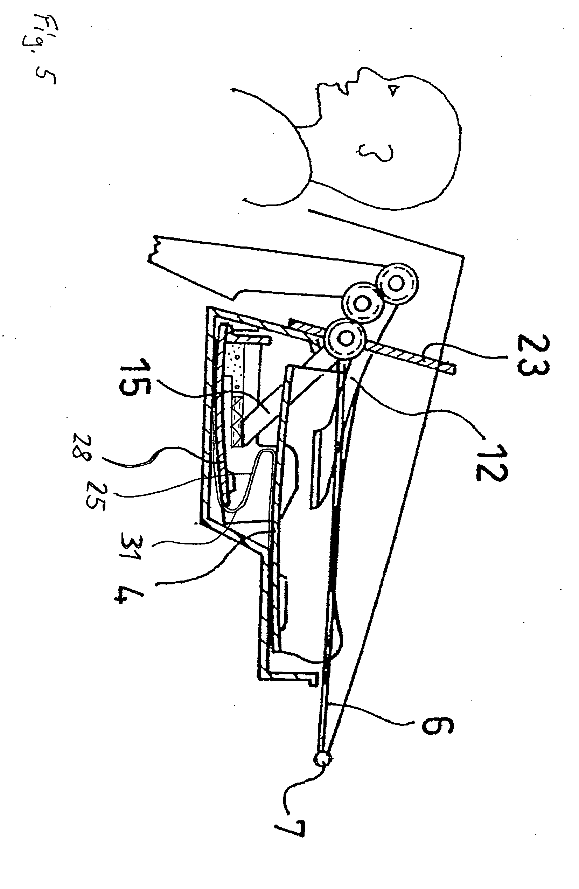

Ein Cabriolet-Fahrzeug 1 enthält (siehe Fig. 1) ein bewegbares und zum Öffnen absenkbares Verdeck oder Dach 2, das zwischen einer den Fahrzeuginnenraum überdeckenden Schließstellung (Fig. 1 und 5) und einer Offenstellung (Fig. 5), in der es in einem heckseitigen Ablageraum oder Verdeckkasten 3 abgelegt ist, verstellbar ist. Das Dach 2 ist gemäß dem dargestellten Ausführungsbeispiel ein bewegbares Softtopdach mit einem vorderen Dachteil 4 und einem hinteren Dachteil 5, die in Schließstellung aneinander angrenzend oder voneinander beabstandet hintereinander angeordnet sind und als starre Dachschalen oder als rahmenartige Strukturen oder dergleichen gebildet sind, die von einem Verdeckstoff 25 überspannt sind, der am vorderen Dachteil 4 und am hinteren Dachteil 5 jeweils zumindest abschnittsweise befestigt ist.

An das in Schließstellung des Daches 2 hintere Dachteil 5 schließt sich ein Deckel 6 des Ablageraums 3 an, der mittels einer Lagereinrichtung (nicht dargestellt) um eine hintere Schwenkachse 7 schwenkbar gelagert ist und mit seinem Vorderrand 8 zum Freigeben einer Durchtrittsöffnung für das Dach 2 um diese Schwenkachse 7 hochgeschwenkt wird, so dass das Dach 2 in den Ablageraum 3 eingeschwenkt bzw. aus ihm ausgeschwenkt werden kann. Die Schwenkachse 7 kann an der Karosserie festgelegt sein und z. B. durch ein Gelenk in Form eines Scharniers gebildet sein oder sie ist z. B. durch ein Vier- oder Mehrgelenk gebildet und verlagert sich beim Verschwenken des Deckels 6 relativ zur Karosserie.

Der Deckel 6 des Ablageraums 3 weist zwei sich seitlich längs erstreckende und nach oben ragende Finnen 9 auf, die bei geschlossenem Dach 2 jeweils mit ihrem Vorderabschnitt 10 seitlich am hinteren Dachteil 5 anliegen, beispielsweise am eine seitliche Ausnehmung 11 des hinteren Dachteils 5 begrenzenden Rand, und bei geschlossenem hinteren Dachteil 5 gegenüber diesem verschwenkt werden können.

Das vordere Dachteil 4 ist mittels einer nach hinten ragende Verlängerung oder eines jeweiligen seitlichen Lagerarms 12, der am vorderen Dachteil 4 angebracht ist und sich von diesem nach hinten erstreckt, an einem karosserieseitigen Hauptlager 13 um eine bezüglich des Fahrzeugs in Querrichtung horizontal verlaufende Schwenkachse 14 mittels eines Schwenklagers schwenkbar gelagert. Die Schwenkachse 14 ist bevorzugt unter dem hinteren Dachteil 5 und insbesondere etwa mittig unter dem hinteren Dachteil 5 angeordnet. Das Hauptlager 13 ist ein Teil einer festen Fahrzeugstruktur, die bei einem zweisitzigen Fahrzeug seitlich neben oder hinter den Sitzen angeordnet ist und etwa bis in Höhe der Kopfstützen reicht.

Das hintere Dachteil 5 ist gleichfalls mittels jeweils eines Lagerarms 15 im Bereich seiner beiden gegenüberliegenden Seitenränder um eine bezüglich des Fahrzeugs in Querrichtung horizontal verlaufende Schwenkachse 16 schwenkbar gelagert, wobei ein die Schwenkachse 16 bildendes Schwenkgelenk ebenfalls an dem karosserieseitigen Hauptlager 13 oder einer anderen fahrzeugfesten Struktur angeordnet ist. Die Schwenkachse 16 ist bevorzugt in etwa unter dem Hinterrandbereich 17 des in Schließstellung angeordneten hinteren Dachteils 5 und bezüglich der Fahrzeuglängsrichtung sowohl hinter der Schwenkachse 14 des vorderen Dachteils 4 wie auch unterhalb dieser Schwenkachse 14 angeordnet. Die beiden Schwenkachsen 14 und 16 sind bei diesem Ausführungsbeispiel in einem solchen Abstand voneinander angeordnet, dass ein Zahnrad 18, das am Schwenkgelenk des vorderen Dachteils 4 koaxial zur Schwenkachse 14 mit dem Lagerarm 12 drehfest verbunden ist, mit einem entsprechenden an dem Lagerarm 15 des hinteren Dachteils 5 fest angebrachten Zahnrad 19 über ein Antriebszahnrad 20 in ständigem Eingriff sind. Eine Rotation des Antriebszahnrades 20 verschwenkt somit gleichzeitig und in gekoppelter Bewegung sowohl das vordere Dachteil 4 wie auch das hintere Dachteil 5. Statt der beiden Zahnräder 18 und 19 können auch dem Schwenkweg angepaßte Zahnsegmente verwendet werden.

Als Antriebseinrichtung für das Antriebszahnrad 20 ist beispielsweise ein Elektromotor oder ein Hydraulikzylinder vorgesehen (nicht dargestellt), der unmittelbar oder über ein Getriebe oder Lenkergetriebe mit dem Antriebszahnrad 20 verbunden ist. Ein rotatorischer Hydraulikzylinder als Antriebseinrichtung bildet hierbei eine integrale Baueinheit mit dem Antriebszahnrad 20.

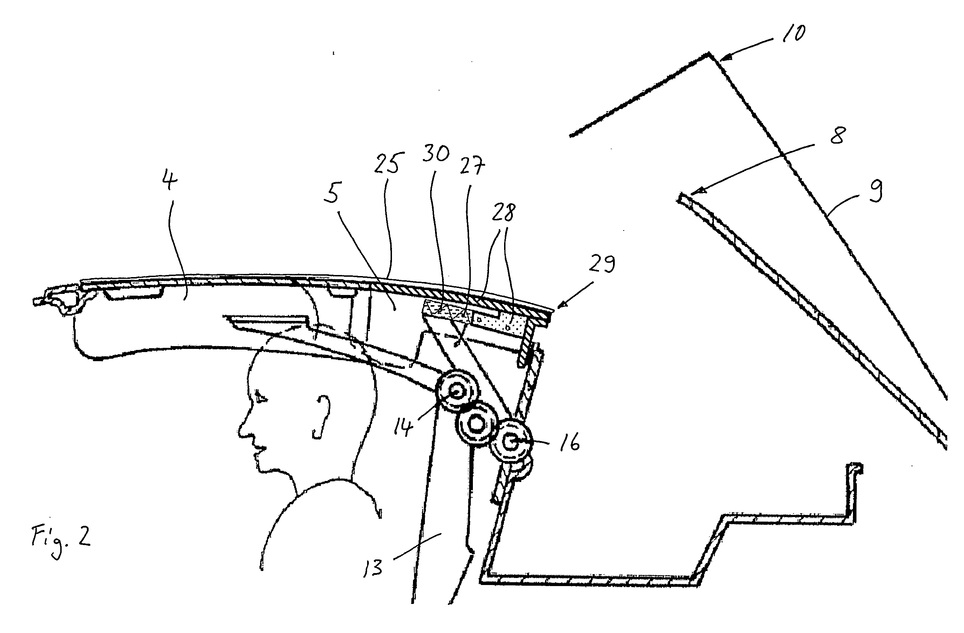

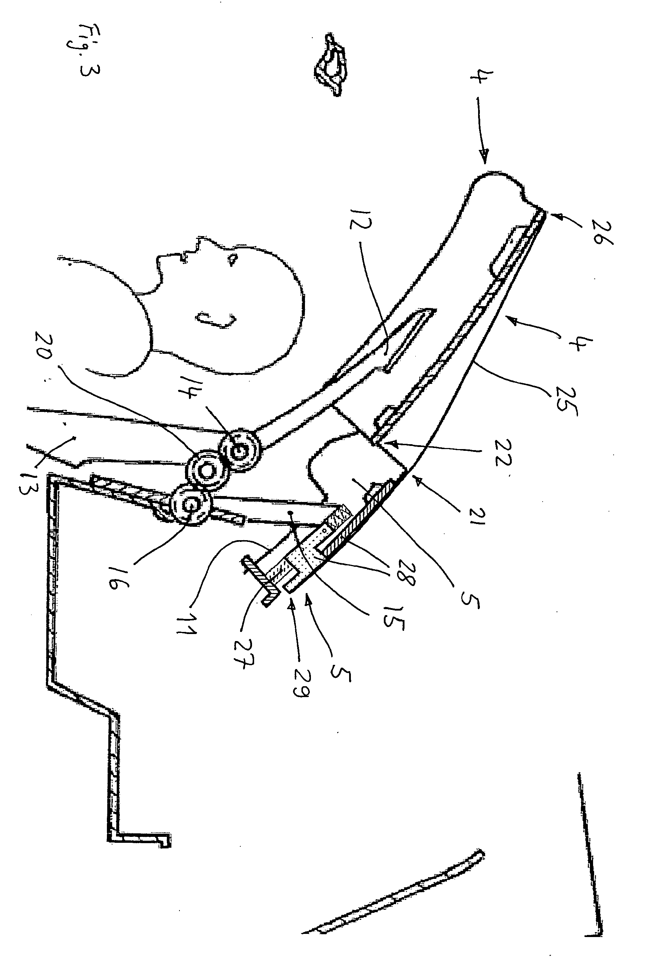

Durch die in den Figuren schematisch dargestellte Anordnung der Schwenkachsen 14 und 16 der Lagerarme 12 bzw. 15 der beiden Dachteile 4 und 5 bewegt sich beim Öffnen des Daches 2 der Vorderrand 21 des hinteren Dachteils 5 vom Hinterrand 22 des vorderen Dachteils 4 weg (Fig. 3), so dass schon in der Anfangsphase der Öffnungsbewegung des Daches 2 keine Kollision zwischen den beiden Dachteilen 4 und 5 auftreten kann, insbesondere falls diese in Schließstellung unmittelbar aneinander angrenzen. Der Verdeckstoff 25 ist am vorderen Dachteil 4 lediglich an dessen Vorderrand 26 oder einem oberseitigen Vorderabschnitt befestigt, so dass er sich von der Oberseite des vorderen Dachteils 4 vollständig oder weitgehend vollständig abheben kann, wenn sich die Dachteile 4 und 5 aus der Schließstellung (Fig. 2) in eine Teilöffnungsstellung bewegen (siehe Fig. 3), in der sich das hintere Dachteil 5 über die Fläche der Oberseite des vorderen Dachteils 4 anhebt.

Um dem Verdeckstoff 25 eine Anpassung an die Bewegung der beiden Dachteile 4 und 5 zu ermöglichen, enthält das hintere Dachteil 5 eine Längsführung 27, an der ein Ausgleichsbauteil 28 in Längsrichtung des hinteren Dachteils 5 verschiebbar gelagert ist. Der Verdeckstoff 25 ist zumindest an seinem Hinterrand 29 an diesem Ausgleichsbauteil 28, insbesondere an dessen Hinterrand, befestigt. Das Ausgleichsbauteil 28 ist z. B. mittels einer Federeinrichtung 30 nach hinten in eine Endstellung am hinteren Dachteil 5 vorgespannt und wird durch den Verdeckstoff 25 entsprechend dem zunehmenden Abstand zwischen dem vorderen Dachteil 4 und dem hinteren Dachteil 5 gegen die Kraft der Federeinrichtung 30 nach vorne verlagert. Diese Ausgleichsbewegung des Ausgleichsbauteils 28 ermöglicht somit eine Anpassung des Verdeckstoffes 25 an die gegenseitigen Stellungen der beiden Dachteile 4 und 5 beim Öffnen und beim Schließen des Daches 2 und verhindert ein Überdehnen des Verdeckstoffes 25. Da der Verdeckstoff 25 durch das Ausgleichsbauteil 28 gespannt gehalten werden kann, kann bei geschlossenem Dach 2 eine sichtbare Dachfuge vermieden werden.

Zweckmäßigerweise sind zwei Längsführungen 27 in den beiden Seitenbereichen des Ausgleichsbauteils 28 vorgesehen und insbesondere an dem jeweiligen Lager 15 des hinteren Dachteils 5 angeordnet oder daran angebracht.

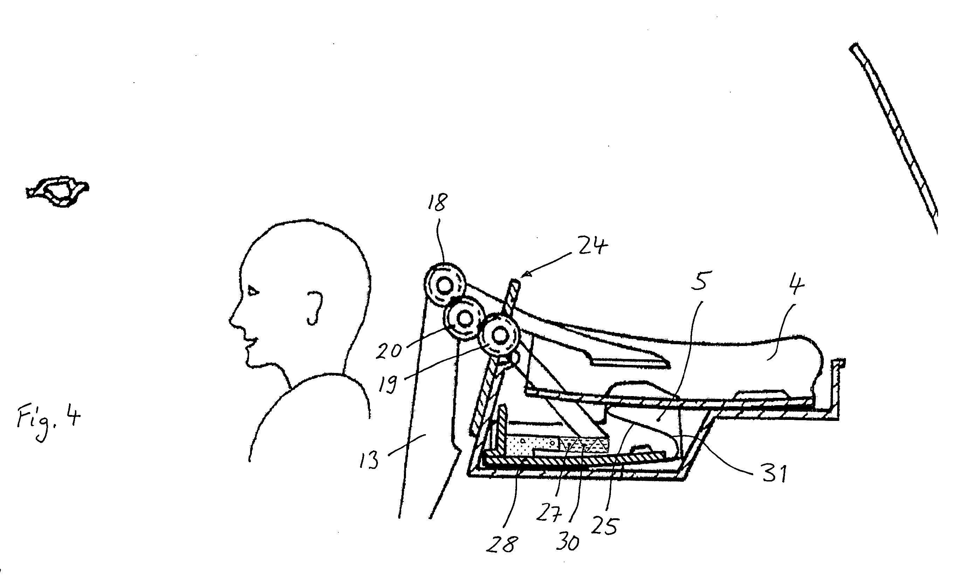

Bei geöffnetem, abgelegtem Dach 2 ist der Verdeckstoff 25 in zumindest einer Falte 31 gefaltet und das Ausgleichsbauteil 28 ist aufgrund der Kraft der Federeinrichtung 30 wieder in seine Ausgangstellung am hinteren Ende des hinteren Dachteils 5 zurückbewegt (das hintere Ende liegt in dieser umgeklappten Stellung des hinteren Dachteils 5 gemäß Fig. 4 und 5 bezüglich des Fahrzeugs vorne).

Des weiteren kann das Ausgleichsbauteil 28 bei geschlossenem Dach 2 mittels einer Spanneinrichtung, insbesondere einem Zugseil (nicht dargestellt), in seine Ausgangslage verstellt sein und/oder in seiner Ausgangslage gehalten sein. Die Spanneinrichtung ist in geeigneter Weise an der Karosserie z. B. im Bereich des Ablageraums 3 oder des Hauptlagers 13 befestigt und/oder gegebenenfalls umgelenkt.

Das Ausgleichsbauteil 28 kann ein schmales Bauteil in der Art eines Spriegels sein oder es ist ein flächiges insbesondere dünnschaliges Element, das über einem festen Teil des hinteren Dachteils 5, wie z. B. einem Rahmen oder einer Dachschale, in Fahrzeuglängsrichtung verschiebbar ist. In jedem Fall ist der Verdeckbezug 25 an dem Ausgleichsbauteil 28 hinterrandseitig befestigt und mit diesem bewegbar, wobei er sich gegenüber einem vorderen Abschnitt des hinteren Dachteils 5, den er überdeckt, verschieben kann. Durch eine im wesentlichen vollflächige Unterstützung des Verdeckstoffes 25 erhält das Softtopdach eine glattflächige Optik.

Ein derartiges Ausgleichsbauteil 28 kann am hinteren Dachteil 5 und/oder am vorderen Dachteil 4 angeordnet sein.

Die gleichzeitige, simultane Öffnungsbewegung der beiden Dachteile 4 und 5 (Bewegung des Daches 2 von Fig. 2 nach Fig. 4) läuft insbesondere auch synchron bzw. direkt gekoppelt ab, wobei die Verschwenkgeschwindigkeiten der beiden Dachteile 4 und 5 in einem festen Verhältnis zueinander stehen und insbesondere gleich oder annähernd gleich sind, wenn der Verschwenkweg der beiden Dachteile 4, 5 je nach Ausgestaltung des Daches 2 etwa eine halbe Umdrehung bzw. etwa 180° Grad beträgt. Im Ablageraum 3 liegt dann das vordere Dachteil 4 in umgeschwenkter Stellung mit seiner Oberseite nach unten weisend unter dem hinteren Dachteil 5, das gleichfalls umgeschwenkt ist und oberhalb des vorderen Dachteils 4 zu liegen kommt. Der Deckel 6 wird schließlich wieder herabgeschwenkt und deckt den das Dach 2 enthaltenden Ablageraum 3 ab (Fig. 5).

Statt einer Bewegungskopplung und -übertragung mittels der Zahnräder können auch Koppellenker oder Lenkergetriebe für die Bewegungskopplung der beiden Dachteile 4, 5 verwendet werden, die wiederum auch von linear wirkenden Antrieben antreibbar sind.

Das Fahrzeug weist eine Heckscheibe 23 auf, die an der Fahrzeugstruktur in etwa zwischen dem Hauptlager 13 und dem Ablageraum 3 im wesentlichen in vertikaler Ausrichtung fest angeordnet ist. Der Hinterrandbereich 17 des hinteren Dachteils 5 ist an die Kontur des Oberrandes 24 der Heckscheibe 23 angepaßt und legt sich bei geschlossenem Dach 2 dicht gegen den Oberrand 24 der Heckscheibe 23 an. Beim Öffnen des Daches 2 schwenkt das hintere Dachteil 4 kollisionsfrei über die Heckscheibe 23. Die Heckscheibe 23 kann auch in alternativer Gestaltung an der Karosserie in vertikaler Richtung verstellbar gelagert sein.

Grundsätzlich kann an dem vorderen Dachteil 4 wie auch an dem hinteren Dachteil 5 noch ein zusätzliches Dachteil fest angebracht oder daran bewegbar gelagert und in insbesondere synchroner Ablagebewegung mit dem zugehörigen Dachteil verstellt werden, wobei auch hier zweckmäßigerweise die Antriebsbewegung von der einen Antriebseinrichtung abgeleitet wird.

Durch die einfache Lagerung der Dachteile 4 und 5 mittels fester Bauteile wie den beschriebenen Lagerarmen, d. h. ohne die Dachteile haltende kinematische Einrichtungen wie Viergelenke oder dergleichen, ist ein einfaches mehrteiliges Softtop-Dach geschaffen, das ohne großen Steuerungsaufwand in simultaner Bewegung seiner Dachteile und in reiner Schwenkbewegung um die Schwenkachsen abgelegt werden kann.

Durch die Befestigung des Verdeckstoffes 25 an dem Ausgleichsbauteil 28 des hinteren Dachteils 5 kann sich der Verdeckstoff 25 an den sich ändernden Abstand zwischen den beiden Dachteilen 4 und 5 anpassen, wodurch grundsätzlich eine derartige Gestaltung des Softtop-Daches 2 möglich wird und eine Beschädigung oder Überdehnung des Verdeckstoffes 25 ausgeschlossen wird.

Das Dach wird als Softtop-Dach bezeichnet, da es einen Verdeckbezug oder einen Verdeckstoff 25 als oberseitige Abdeckung aufweist. Dabei kann das Dach auch Hardtop-Dachelemente aufweisen und dementsprechend gebildet sein.

### Bezugszeichenliste

- 1: Cabriolet
- 2: Dach
- 3: Ablageraum
- 4: vorderes Dachteil
- 5: hinteres Dachteil
- 6: Deckel
- 7: Schwenkachse
- 8: Vorderrand
- 9: seitliche Finne
- 10: Vorderabschnitt
- 11: Ausnehmung
- 12: Lagerarm
- 13: Hauptlager
- 14: Schwenkachse
- 15: Lagerarm
- 16: Schwenkachse

- 17: Hinterrandbereich
- 18: Zahnrad
- 19: Zahnrad
- 20: Antriebszahnrad
- 21: Vorderrand
- 22: Hinterrand
- 23: Heckscheibe
- 24: Oberrand
- 25: Verdeckstoff
- 26: Vorderrand
- 27: Längsführung
- 28: Ausgleichsbauteil
- 29: Hinterrand
- 30: Federeinrichtung
- 31: Falte

## Patentansprüche

1. Fahrzeug mit einem Softtop-Dach, das ein vorderes Dachteil (4) und ein hinteres Dachteil (5) sowie einen von diesen getragenen und an diesen befestigten Verdeckstoff (25) aufweist,
wobei die beiden an der Karosserie bewegbar gelagerten Dachteile (4, 5) zusammen mit dem Verdeckstoff (25) zwischen einer den Fahrzeuginnenraum überdeckenden Schließstellung und einer den Fahrzeuginnenraum freigebenden Ablagestellung, in der sie in einem heckseitigen Ablageraum (3) des Fahrzeugs abgesenkt sind, verstellbar sind,
**dadurch gekennzeichnet,**
**dass** der Verdeckstoff (25) zumindest an einem der beiden Dachteile (4, 5) an einem Ausgleichsbauteil (28) befestigt ist, das an diesem Dachteil (4 bzw. 5) bewegbar gelagert ist und das beim Verstellvorgang des Daches (2) eine Ausgleichsbewegung für einen sich ändernden Abstand zwischen den beiden sich bewegenden Dachteilen (4, 5) ausführt.

2. Fahrzeug nach Anspruch 1,
**dadurch gekennzeichnet, dass** das Ausgleichsbauteil (28) an dem Dachteil (4 bzw. 5) in Fahrzeuglängsrichtung verstellbar gelagert ist.

3. Fahrzeug nach Anspruch 1 oder 2,
**dadurch gekennzeichnet, dass** das Ausgleichsbauteil (28) an zumindest einer Längsführung des Dachteils (4, 5) verschiebbar gelagert ist.

4. Fahrzeug nach einem der Ansprüche 1 bis 3,
**dadurch gekennzeichnet, dass** das Ausgleichsbauteil (28) an dem hinteren Dachteil (5) bewegbar gelagert ist.

5. Fahrzeug nach einem der Ansprüche 1 bis 4,
**dadurch gekennzeichnet, dass** der Verdeckstoff (25) das Ausgleichsbauteil (28) überdeckt und zumindest an dessen Hinterrand oder an dessen Vorderrand befestigt ist.

6. Fahrzeug nach einem der Ansprüche 1 bis 5,
**dadurch gekennzeichnet, dass** das Ausgleichsbauteil (28) in seine Ausgangslage mittels einer Federeinrichtung (30) vorgespannt ist und vom Verdeckstoff (25) oder einer Stelleinrichtung für seine Ausgleichsbewegung gegen die Federeinrichtung (30) bewegt wird.

7. Fahrzeug nach einem der Ansprüche 1 bis 6,
**dadurch gekennzeichnet, dass** das Ausgleichsbauteil (28) bei geschlossenem Dach (2) mittels einer Spanneinrichtung, insbesondere einem Zugseil, in seine Ausgangslage verstellt wird und/oder in seiner Ausgangslage gehalten ist.

8. Fahrzeug nach einem der Ansprüche 1 bis 7,
**dadurch gekennzeichnet, dass** das Ausgleichsbauteil (28) mittels einer Antriebseinrichtung verstellbar ist.

9. Fahrzeug nach einem der Ansprüche 1 bis 8,
**dadurch gekennzeichnet, dass** sich das vordere Dachteil (4) und das hintere Dachteil (5) zumindest über einen Abschnitt ihres Ablageweges derart voneinander entfernen, dass der Verdeckstoff (25) mit dem Ausgleichbauteil (28) eine Ausgleichsbewegung ausführt.

10. Fahrzeug nach einem der Ansprüche 1 bis 9,
**dadurch gekennzeichnet, dass** das vordere Dachteil (4) und das hintere Dachteil (5) mittels jeweiliger Lagereinrichtungen (12, 15) an einem karosserieseitigen Hauptlager (13) schwenkbar gelagert sind und beim Verstellen in die Ablagestellung in reiner Schwenkbewegung um eine jeweilige feststehende Schwenkachse (14 bzw. 16) mit ihren Oberseiten nach unten umschwenken.

11. Fahrzeug nach einem der Ansprüche 1 bis 10,
**dadurch gekennzeichnet, dass** die Schwenkbewegungen der beiden Dachteile (4, 5) zwischen der Schließstellung und der Ablagestellung simultan erfolgen.

12. Fahrzeug nach einem der Ansprüche 1 bis 11,
**dadurch gekennzeichnet, dass** die Schwenkachsen (14, 16) derart angeordnet sind, dass im Ablageraum (3) das vordere Dachteil (4) über dem hinteren Dachteil (5) angeordnet ist.
